# EUROPÄISCHE PATENTANMELDUNG

(11) **EP 0 683 020 A2**
(43) Veröffentlichungstag der Anmeldung: **22.11.1995**
(21) Anmeldenummer: 95106628.1
(22) Anmeldetag: 03.05.1995
(51) Int. Cl.: B26D 5/08, B26D 1/62, B41F 13/012, F16H 55/18

(54) **Bearbeitungsmaschine für Materialbahnen, insbesondere Papier-Formatquerschneider**

(30) Priorität: 19.05.1994 DE 4417493
(71) Anmelder: BIELOMATIK LEUZE GmbH + Co., D-72639 Neuffen (DE)
(72) Erfinder: Klein, Hansjörg, D-73773 Aichwald (DE)
(74) Vertreter: Patentanwälte Ruff, Beier, Schöndorf und Mütschele

(57) **Zusammenfassung**

Bei einem Querschneider, insbesondere für Papier-Kleinformate, werden an den beiden gegenläufig synchronisiert angetriebenen Messerwellen (12, 13) jeweils zwei Messersätze vorgesehen, die auf beiden Messerwellen so gegeneinander versetzt angeordnet sind, daß in einer bestimmten Drehstellungs-Zuordnung der beiden Messerwellen zueinander jeweils nur einer der Sätze zum Eingriff kommt, während die anderen Messer ohne Zusammenwirken mit einem entsprechenden Gegenmesser den Schneidspalt durchlaufen. Es ist dadurch möglich, mit einem Messerwellensatz mehrere Synchron-Schnittlängen durch bloße Veränderung der gegenseitigen Drehstellungszuordnung der Messerwellen zueinander zu verwirklichen.

Es ist ferner ein System zur sektoriellen Spielminimierung der Synchronisations-Zahnräder (34) beschrieben. Dazu sind im Zahnradkörper (61) schlitzförmige, in Umfangsrichtung verlaufende Taschen (66) vorgesehen, die durch eine Hydraulikflüssigkeit unter Druck gesetzt werden und die Verzahnung sektoriell aufweiten.

## Beschreibung

Die Erfindung betrifft eine Bearbeitungsmaschine für Materialbahnen, insbesondere einen Papier-Formatquerschneider, mit zwei gegenläufig drehbaren Maschinenteilen, insbesondere Messerwellen mit wenigstens einen Messersatz bildenden Messern am Umfang, wobei die drehbaren Maschinenteile durch wenigstens ein Zahnradpaar mit je wenigstens einem Zahnradkörper und einer Verzahnung miteinander synchronisiert sind.

Als Formatquerschneider werden normalerweise Querschneider bezeichnet, die aus in Streifen (Nutzen) geteilten Materialbahnen Gebrauchsformate, z.B. die üblichen DIN A 3- oder DIN A 4-Formate schneiden. Dabei sind üblicherweise zwei oder drei Messer auf jeder Messerwelle angeordnet und die Messerwellen so einander zugeordnet, daß jeweils zwischen zwei zusammenpassend eingestellten Messern ein Schnitteingriff hergestellt wird.

Dabei wird als Schnitteingriff hier und im folgenden eine solche Zuordnung der beiden Messer bezeichnet, daß zwischen ihnen ein möglichst einwandfreier Schnitt erfolgt. Die Messer brauchen und sollen sich dabei gegenständlich nicht zu berühren.

Die sogenannte Synchron-Schnittlänge zwischen zwei Schnitten wird durch den Umfangsabstand benachbarter Messer auf der jeweiligen Messerwelle bestimmt, da es notwendig ist, daß während des Schnitteingriffes die Bahngeschwindigkeit und die Umfangsgeschwindigkeit der Messer übereinstimmen. Somit kann bei gleichförmigem Umlauf der Messerwellen nur eine Formatlänge geschnitten werden.

Um eine Änderung der Formatlänge zu ermöglichen, wurden mehrere Messerwellen für jede Maschine vorgesehen, die bei Formatänderung zu wechseln und bezüglich der Messereinstellung wieder neu auszurichten waren. Eine solche Umrüstung war sehr arbeits- und zeitaufwendig und bedingte einen langen Maschinenstillstand.

Eine andere Möglichkeit zur Formatlängenänderung ist durch die DE-A-36 08 111 (= US-A-4 881 436) bekanntgeworden. Bei ihr werden die Messerwellen direkt von Gleichstrommotoren angetrieben, die sehr präzise und schnelle Drehzahländerungen ermöglichen, ggf. auch mehrfach je Wellenumdrehung. Durch diesen Ungleichförmigkeits-Antrieb ist es möglich, die Messerwellen beispielsweise zwischen zwei Schnitteingriffs-Positionen zu verzögern, während die Materialbahn mit gleichförmiger Geschwindigkeit weiterläuft. Dadurch wird die Schnittlänge größer und weicht vom Synchronformat ab. Derartige periodische Verzögerungen und Beschleunigungen der Messerwellen wurden auch früher schon mit mechanischen Ungleichförmigkeitsbetrieben verwirklicht. Diese Lösung mit Ungleichförmigkeitsantrieb ist bezüglich der einzustellenden Längen sehr flexibel, erfordert jedoch eine Reduzierung der Höchstleistung des Querschneiders, um die auftretenden Beschleunigungen und Verzögerungen in vernünftigen Größenordnungen zu halten. So muß beispielsweise bei einer Synchron-Schnittlänge von 325 mm bei der Reduzierung der Schnittlänge auf 280 mm durch Ungleichförmigkeitsantrieb die Maschinengeschwindigkeit von 350 m / Min. auf 150 m / Min. herabgesetzt werden, d.h. mehr als halbiert werden.

In der DE-A-36 08 111 sind Spannhülsen gezeigt, mittels derer die Synchronisationszahnräder auf den Messerwellen festgespannt werden können. Diese Spannhülsen weisen einen umlaufenden, mit Druckmittel gefüllten Spalt auf. Infolge des umlaufenden Spaltes war eine gewisse Radialelastizität vorhanden, die es ermöglichte, das etwas exzentrisch gefertigte Zahnrad an einer Stelle des Umfanges auf minimales Zahnspiel einzustellen. Die Radialelastizität verhinderte dabei ein Festfressen der Zahnräder.

Aus der US-A-3 182 540 ist ein Papierquerschneider bekannt geworden, der an einer Messerwelle zahlreiche Messer trägt, die mit einer walzenartigen Gegenrolle zur Durchführung eines Quetsch-Schnittes zusammenarbeiten. Die Gegenwalze hat auf ihrer Oberfläche erhöhte und erniedrigte Bereiche, so daß durch eine bestimmte gegenseitige Konstellation von Messerwelle und Gegenwalze jeweils nur bestimmte Messer den Quetsch-Schnitt ausführen. Dadurch läßt sich eine unterschiedliche Formatlänge einstellen.

Es ist ferner aus der DE-PS 602721 bekannt geworden, zwei jeweils mit Messer bestückte Messerwellen jeweils nur zum Schnitt mittels eines Handhebels in Eingriff zu bringen.

Durch eine Kurvensteuerung werden sie danach wieder auseinandergedrückt.

Die DE-A-40 05 028 beschreibt zwei mit Messern bestückte Messerwellen, die die jeweils gegenüberliegende Messerwelle als Amboßwalze zur Durchführung eines Quetschmesserschnittes benutzen. Durch entsprechende Messerkonstellation können abwechselnd längere und kürzere Abschnitte (Zwischenstreifen) herausgeschnitten werden.

### Aufgabe und Lösung

Aufgabe der Erfindung ist es, eine Bearbeitungsmaschine für Materialbahnen zu schaffen, die verbesserte Einstellungsmöglichkeiten zweier drehbarer Maschinenteile zueinander aufweist. Insbesondere soll ein gegenüber dem Stand der Technik verbesserter Querschneider geschaffen werden, der eine verbesserte Anpaßbarkeit an die Betriebsbedingungen aufweist und insbesondere eine Anpassung an unterschiedliche Schnittlängen ohne bzw. mit geringerer Einbuße an Schnittgeschwindigkeit und ohne großen Umbauaufwand ermöglicht.

Gemäß der Erfindung sind Mittel zur sektoriellen Einstellung des Zahnspiels in wenigstens einer Umfangsposition wenigstens eines Zahnrades vorgesehen.

Bei Papierbearbeitungsmaschinen ist für verschiedene Vorgänge, insbesondere für die Schnittgenauigkeit und Standzeit der Messer von Querschneidern, eine außerordentlich genaue Einstellung von Maschinenteilen zueinander nötig. Diese muß auch unter allen Betriebsbedingungen eingehalten werden. Insbesondere beim Ungleichförmigkeitsantrieb könnten durch geringfügiges Spiel zwischen Synchronisationszahnrädern die Einstellung des genauen Schnittspaltes zwischen den Messern beeinträchtigt sein. In der Erkenntnis, daß es fast unmöglich ist, eine Zahnradpaarung so genau zu arbeiten, daß sie über den ganzen Umfang absolut spielfrei arbeitet, ist daher vorgesehen, daß an allen für den Schnittvorgang kritischen Stellen das Spiel möglichst durch manuelle Einstellbarkeit auf Null gebracht wird, während in den dazwischen liegenden Partien ein gewisses Zahnspiel zugelassen werden kann. Dies kann dadurch geschehen, daß das Zahnrad durch vorzugsweise hydraulische Spannmittel oder z.B. mechanisch durch einschraubbare Keile oder Konen, an den Stellen, an denen die einzelnen Messersätze zum Schnitteingriff kommen, wenigstens eines der Zahnräder radial so aufgeweitet wird, daß es einen sogenannten "Hochschlag" bekommt und an dieser Stelle spielfrei läuft.

Die sektorielle Einstellmöglichkeit des Zahnspieles ermöglicht es, über den Umfang eines Zahnrades mehrere dieser sektoriellen Einstellmittel vorzusehen. Dies kann durch sektorielle Verformung des Arbeitsumfanges des Zahnrades gegenüber der Rotationsymmetrie geschehen. Die Zahnflanken können in dem entsprechenden Sektor in Richtung auf das damit in Eingriff befindliche Zahnrad verschoben werden, beispielsweise bei einem außenverzahnten Zahnrad durch geringfügige Aufweitung des Zahnkranzes in diesem Sektor.

Dadurch ist es möglich, am Umfang auch mehrere Stellen zu schaffen, die praktisch spielfrei laufen, was einerseits zur genauen Einstellung eines Eingriffs zwischen zwei Teilen, beispielsweise des auf hundertstel Millimeter genauen Zusammenspiels zweier Messer dienen kann, jedoch auch der Vermeidung von Schlägen bei starken Lastwechseln, wie sie bei den eingangs beschriebenen Ungleichförmigkeitsantrieben auftreten.

Eine besonders vorteilhafte Ausführungsform weist eine auf einen Umfangsabschnitt des Zahnrads begrenzte Druckmitteltasche auf, in die ein flüssiges Druckmedium, beispielsweise Hydraulikflüssigkeit eingepumpt wird. Diese Druckmitteltasche, beispielsweise ein schmaler, in Umfangsrichtung verlaufender und über einen bestimmten Sektor reichender Schlitz unterhalb der Verzahnung kann nach außen durch eine Schweißnaht verschlossen und an eine Druckmittelzuleitung über ein Absperrventil angeschlossen sein. Die Größe des Sektors, d.h. die Länge des Schlitzes in Umfangsrichtung, kann den Erfordernissen über die Länge des spielfreien Bereiches angepaßt werden. Selbst wenn nur im Bereich eines einzigen Zahnes ein Null-Spiel erforderlich ist, wird die Druckmitteltasche über mehrere Zähne reichen, um den Spalt mit möglichst geringer Abweichung von der Kreisform zu überbrücken. Durch unterschiedliche Dicke und Form des zwischen der Druckmitteltasche und der Verzahnung entstehenden Steges kann die Form des aufgeweiteten Abschnittes beeinflußt werden. Auch in Achsrichtung kann das Profil dieses Steges zur Beeinflussung der Biegelinie und damit der Außenkontur des Zahnrades im Mikrobereich eingesetzt werden.

Besonders vorteilhaft ist die sektorielle Einstellmöglichkeit bei Querschneidern, die an beiden Messerwellen mehrere Messer haben, die so zueinander eingestellt werden können, daß sich jeweils in einer bestimmten Drehstellungszuordnung der Messerwellen zueinander unterschiedliche Schnitteingriffe bilden. Statt also die Messerwellen beim Formatwechsel austauschen zu müssen oder mittels der eingangs beschriebenen Ungleichförmigkeitsantriebe den vollen Unterschied zwischen Messerwellenumfang und Formatlänge mittels Beschleunigung und Verzögerung zu überbrücken, kann dadurch die Synchronschnittlänge geändert werden. Da hierbei Messer an unterschiedlichen Umfangspositionen der Messerwelle zum Einsatz kommen und zueinander mit exaktem, kleinstem Schnittspalt ausgerichtet sein müssen, können die die beiden Messerwellen synchronisierenden Zahnräder mittels der sektoriellen Einstellmittel jeweils an den Eingriffspositionen auf Spielfreiheit eingestellt werden.

Zum Ändern des Messersatzes, d.h. der Synchron-Schnittlänge, werden die beiden Messerwellen in ihrer gegenseitigen Drehstellungs-Zuordnung verändert. Dies könnte dadurch geschehen, daß die die beiden Messerwellen miteinander synchronisierenden Zahnräder außer Eingriff und in einer neuen gegenseitigen Zuordnung wieder in Eingriff gebracht werden. Bevorzugte Einstellmittel können wenigstens eine mit einer Radialverzahnung versehene, insbesondere druckmittelbetätigte Rastkupplung aufweisen. Diese Radialverzahnung kann zwischen zwei Stellringen vorgesehen sein, von denen der eine an einem Synchronisationszahnrad einer Messerwelle und der andere mit der betreffenden Messerwelle drehfest verbunden ist. Diese Radialverzahnungen können durch eine entsprechende Radialverzahnung an einem axial beweglichen Verbindungskörper überbrückt werden. Dieser bildet praktisch eine formschlüssige Raste, die selbst nur auf Scherung belastet wird und durch entsprechende Zahnausbildung spielfrei gemacht werden kann. Derartige Einstellmittel können bei der Verbindung der Messerwellen durch zwei Synchronisierungs-Zahnradsätze an jedem dieser Zahnradsätze vorgesehen sein.

Beim Eingriff eines Messersatzes passieren die Messer des anderen Messersatzes den Schnittspalt, ohne daß dort aber ein entsprechendes Gegenmesser vorhanden ist. Bei Messerwellen, bei denen die Messer kaum über die Messerwellenoberfläche vorstehen, ist es sinnvoll, an solchen Stellen, wo ein Messer der anderen Messerwelle den Schnittspalt passiert, einen Durchlaß, z.B. eine Ausnehmung in der Messerwellen-Oberfläche, vorzusehen, damit die Materialbahn, die ja an dieser Stelle nicht geschnitten werden soll, ggf. dorthinein ausweichen kann. Dabei ist zu berücksichtigen, daß die Materialbahn normalerweise aus mehreren Lagen besteht, die beim Schneiden von Papierbahnen von mehreren einzelnen Abrollungen zu einer gemeinsamen durch die Gesamtmaschine geführten Lage zusammengeführt werden. Als solche Lage werden sie längs- und quergeschnitten, geschuppt übereinander gelegt, gestapelt und dann riesweise abgeführt.

Um Beeinträchtigungen der durchlaufenden Materialbahn durch die nicht in Eingriff befindlichen Messer zu verhindern bzw. zu minimieren, sollte insbesondere bei Messern, die über die Messerwellenoberfläche vorstehen, möglichst dafür gesorgt werden, daß der Umfangsabstand zwischen Messern der unterschiedlichen Messersätze so groß wie möglich sind. Bei einer Messerwellenanordnung mit einem Zweier- und einem Dreier-Messersatz, wobei die Messer also 180 und 120° gegeneinander versetzt sind, kann die Anordnung so getroffen werden, daß der Minimalabstand zwischen zwei Messern unterschiedlicher Messersätze 30° beträgt. Es wäre, z.B. bei empfindlichen Papieren, möglich, Abdeckungen für nicht im Schnitteinsatz befindliche Messer vorzusehen, z.B. hinter einem vorstehenden Obermesser eine ausklappbare Abdeckung, die die Schnittkante überdeckt oder an diese anschließt.

Durch die Erfindung ist es möglich, viele Formate mit bzw. sehr nahe an der Synchron-Schnittlänge zu schneiden. So stehen beispielsweise die in den U.S.A. üblichen Hauptformate 11 und 17 Zoll nahezu im Verhältnis 2 : 3 zueinander. Auch die DIN-Formate liegen mit 1,41 bzw. 2,0 zum jeweils größeren nahe an den Verhältnissen 2 : 3 bzw. 1 : 2. Für das letztere bieten sich Messersätze von je 1 und 2 oder 2 und 4 Messern an. Geringfügige Abweichungen können dann durch das an sich bekannte Verfahren mit Ungleichförmigkeitsantrieb, beispielsweise im Motor-Direktantrieb nach DE-A-36 08 111 anpassen, ohne daß wesentliche Einbußen in der Produktionsgeschwindigkeit nötig sind.

Es ist auch möglich, Messersätze mit unterschiedlichen Charakteristika, wie Material (Stahl / Hartmetall), Bauweise, Einstellung, insbesondere Schnittwinkel-Konfiguration etc. vorzusehen. Dabei können jeweils optimale Bedingungen für verschiedene Betriebsbedingungen und Materialbahnsorten erzielt werden, ohne daß ein Wechsel der Messerwellen nötig wird. Auch zwei in Art und Messeranzahl gleiche Messersätze können unter dem Gesichtspunkt der Standzeitverlängerung zwischen Messerwechseln verwendet werden.

Bei einer bevorzugten Ausführung eines Querschneiders, insbesondere für Papier-Kleinformate, werden an den beiden gegenläufig synchronisiert angetriebenen Messerwellen jeweils zwei Messersätze vorgesehen, die auf beiden Messerwellen so gegeneinander versetzt angeordnet sind, daß in einer bestimmten Drehstellungs-Zuordnung der beiden Messerwellen zueinander jeweils nur einer der Sätze zum Eingriff kommt, während die anderen Messer ohne Zusammenwirken mit einem entsprechenden Gegenmesser den Schneidspalt durchlaufen. Es ist dadurch möglich, mit einem Messerwellensatz mehrere Synchron-Schnittlängen durch bloße Veränderung der gegenseitigen Drehstellungszuordnung der Messerwellen zueinander zu verwirklichen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Figuren-Kurzbeschreibung

Ein Ausführungsbeispiel der Erfindung ist in den Zeichnungen dargestellt und wird im folgenden näher erläutert. In den Zeichnungen zeigen:
- Fig. 1: eine schematische Seitenansicht zweier zusammenwirkender Messerwellen in Eingriffsposition eines Messersatzes,
- Fig. 2: ein vergrößertes Detail aus Fig. 1,
- Fig. 3 und 4: Darstellungen entsprechend Fig. 2 jeweils während eines unwirksamen Messerdurchganges durch den Schneidspalt,
- Fig. 5: die Messerwellen nach Fig. 1 während der Verstellung zum Eingriff eines Seitenmessersatzes,
- Fig. 6: die Messerwellen in Schneideingriff des zweiten Messerssatzes,
- Fig. 7: einen Teilschnitt durch die Endabschnitte zweier Messerwellen,
- Fig. 8: ein Detail aus Fig. 4.,
- Fig. 9: ein Detail aus Fig. 7 und
- Fig 10: einen Schnitt nach der Linie X in Fig. 7

### Beschreibung des bevorzugten Ausführungsbeispiels

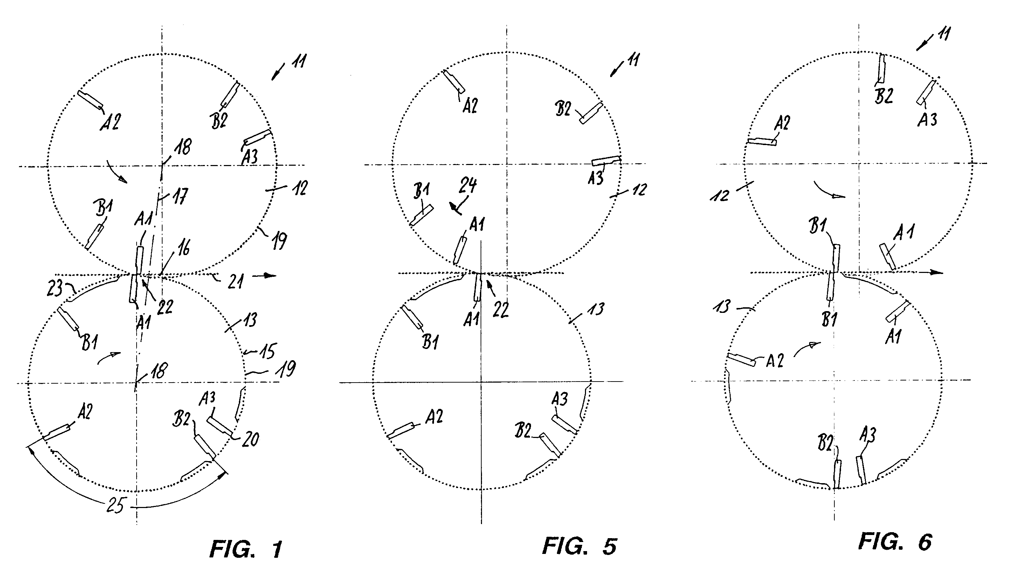

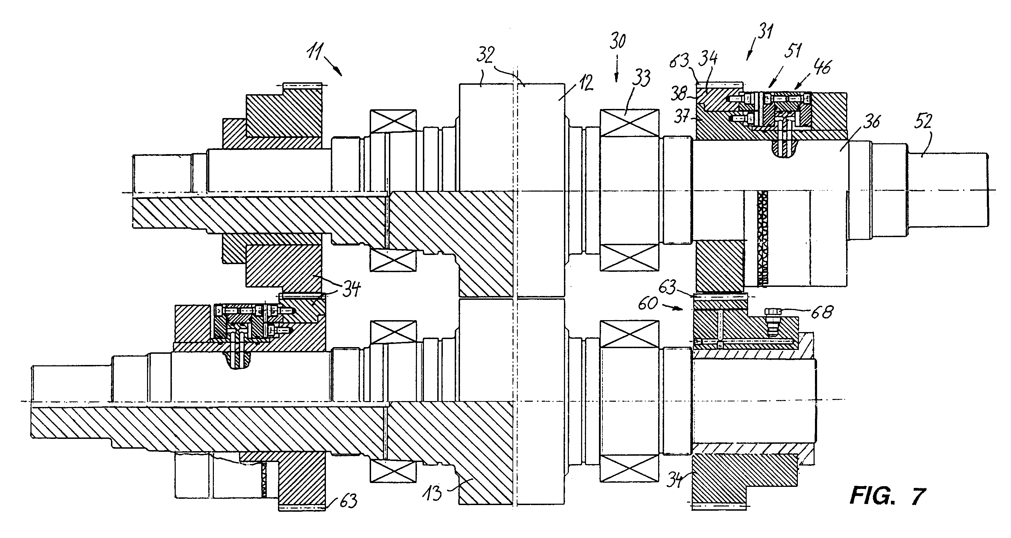

Die Zeichnungen zeigen einen Querschneider 11 mit zwei Messerwellen 12 und 13, die in später anhand von Fig. 7 noch näher erläuterter Weise gegenläufig synchron angetrieben sind. Die Messerwellen sind teilweise über 2000 mm lange, meist hohle Trommeln aus hochfesten Materialien, die bei möglichst geringer Masse höchste Biege- und Drehsteifigkeit haben sollten. In Spanneinrichtungen 28 sind einstellbar fünf Messer an jeder Messerwelle befestigt, die zu zwei Messersätzen A und B (Fig. 1) gehören. Der Messersatz A enthält drei Messer A1 bis A3, die mit gleichmäßiger Teilung von 120° am Umfang der Messerwelle angeordnet sind, während die zwei Messer B1 und B2 des Messersatzes B jeweils 180° voneinander entfernt am Umfang liegen. Die Messer können selbst zum Vermeiden eines zu harten Schnittes mit leicht schraubenförmigem Versatz angeordnet sein.

Auf der oberen Messerwelle 12 sind die Messer der beiden Messersätze A und B so zueinander angeordnet, daß sie einen gewissen Umfangsabstand nicht unterschreiten. Bei der gewählten Anordnung 2/3 liegen, wie aus Fig. 1 ersichtlich, 30° zwischen den Messern A1 und B1 bzw. A3 und B2.

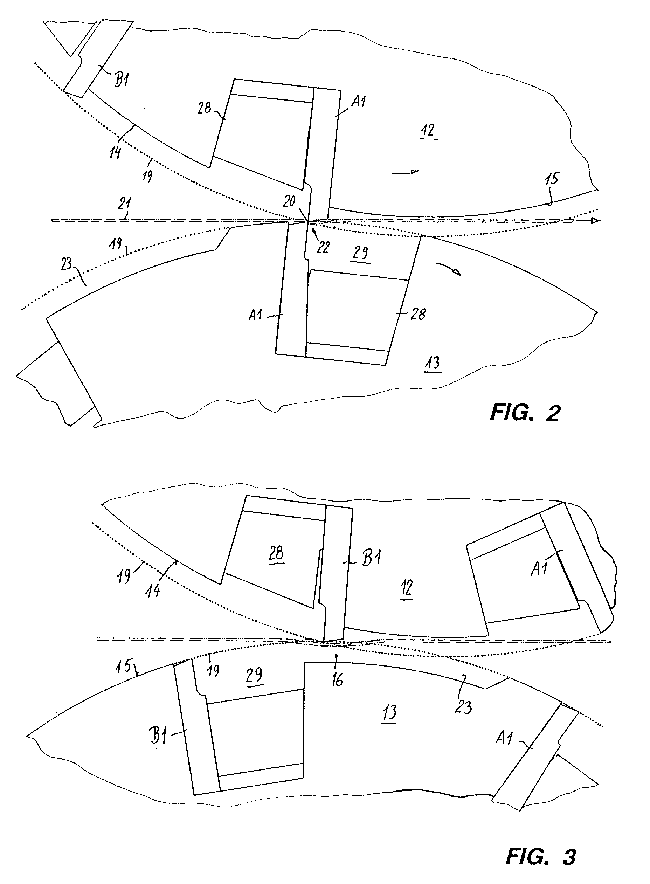

Wie aus Fig. 2 zu erkennen ist, ragen die Messer der oberen Messerwelle 12 etwas über die Messerwellenoberfläche 14 hinaus und tauchen in nur kleine Ausnehmungen 29 ein, die in der Messerwellenoberfläche 15 der unteren Messerwelle 13 im Bereich der Messerschneide 20 vorgesehen sind. Die Messer der unteren Messerwelle 13 ragen nicht über die Messerwellenoberfläche 15 hinaus.

In Fig. 1 ist der Schnitteingriff zwischen den Messern A1 dargestellt. Es ist zu erkennen, daß der Schneidspalt 16, d.h. der im Bereich der Verbindungslinie 17 zwischen den Achsen 18 der Messerwellen 12, 13 liegende Bereich der Messerwellen, in der sie sich am nächsten kommen und in der sich die Flugkreise 19 der Messerschneidkanten 20 überschneiden, von der Materialbahn 21 durchquert wird. Die Messer sind gegenüber der Radialen zur Messerwelle leicht schräg angeordnet, so daß sie bei ihrem Eintauchen in die in Fig. 1 dargestellte Schnittposition 22 in Längsrichtung ausgerichtet zueinander stehen.

Der Schnitt erfolgt beim Durchlaufen dieses Schneidspaltes 16 (Fig. 2). Bei weiterer Drehung der Messerwellen durchläuft bei Synchron-Schnittlänge 25, die Materialbahn 21 den Schneidspalt mit gleicher Geschwindigkeit wie die Umfangsgeschwindigkeit der Flugkreise 19 der Messer-Schneidkanten 20.

Bei einer von der Synchron-Schnittlänge 25 abweichenden Schnittlänge werden die Messerwellen nun beschleunigt oder verzögert und laufen dementsprechend von der Materialbahn 21 unterschiedlicher Geschwindigkeit bis kurz vor das Eintreffen der nächsten Messerkombination A2, wo die Synchron-Geschwindigkeit wieder hergestellt wird. Zwischen diesen beiden Positionen passieren jedoch die Messer B1 den Schneidspalt 16, jedoch mit deutlichem Umfangsabstand voneinander, so daß es zu keinem Schnitt kommt (Fig. 3). Wegen des Überstandes des Messers B1 auf der Obermesserwelle 12 ist in der Messerwellenoberfläche 15 der Messerwelle 13 eine Ausnehmung 23 vorgesehen, die einen Durchlaß für die Materialbahn 21 unter dem Messer B1 bildet und so tief ist, daß das Messer wenigstens um die Materialbahndicke von ihrem Grund entfernt läuft. Eine geringfügige Ablenkung der Materialbahn quer zu ihrer Laufrichtung in diesem Bereich stört am wenigsten, wenn der Umfangsabstand der hier unwirksamen Messer von der Schnittposition 22 so groß wie möglich ist. Insbesondere sollte das am Obermesser angestrebt werden, wenn es über die Oberfläche 15 vorragt.

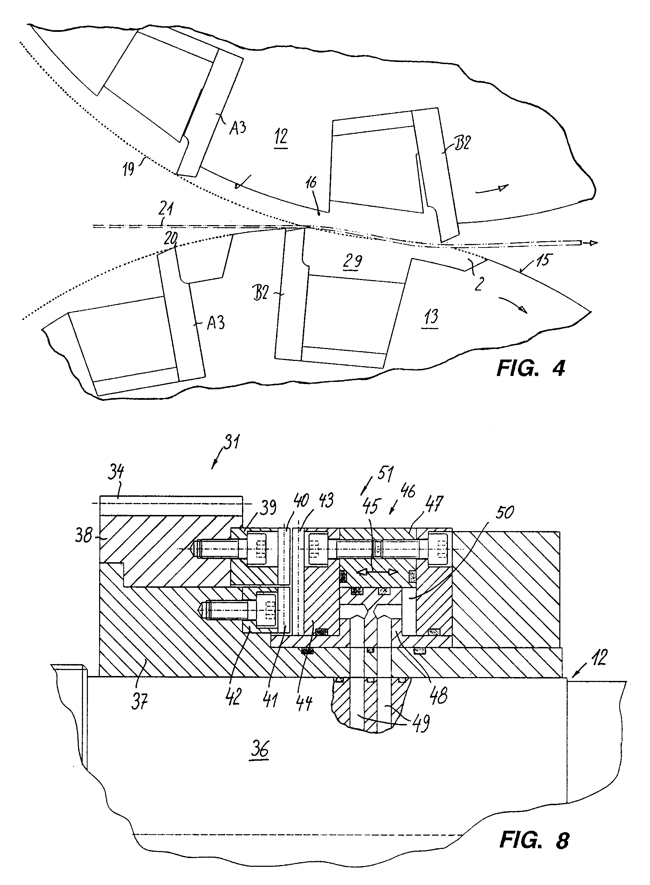

Fig. 4 zeigt den Durchgang der Messer B2 durch den Schneidspalt 16, die an der Unter-Messerwelle 13 enger (15°) an den folgenden Messern A3 stehen als an der Ober-Messerwelle 12. Man erkennt auch dort das Ausweichen der Materialbahn 21 in die Ausnehmung 23, die unmittelbar an die Ausnehmung 29 anschließen kann.

In Fig. 5 ist die Verstellung der beiden Messer schematisch gezeigt, die vorgenommen wird, um von der Eingriffsposition des Messersatzes A (Fig. 1) zur Eingriffsposition des Messersatzes B (Fig. 6) zu kommen. Wenn die Messerwellen in der Position nach Fig. 1 stehen, wird, selbstverständlich bei stillgesetztem Antrieb, die Synchronisation zwischen den beiden Messerwellen gelöst und die obere Messerwelle in Richtung des Pfeiles 24 soweit verdreht, bis der Messersatz B in Eingriffsposition ist, d.h. die Messer B1 und B2 auf den Messerwellen 12 und 13 jeweils in gleichem Umfangsabstand von der Angriffsposition 22 stehen. Dies kann durch Verstellung um einen bestimmten und vorhergegebenen Winkelabstand erfolgen, im vorliegenden Beispiel 15°. Eine manuelle Nachjustierung ist nicht mehr nötig.

Da nur die obere Messerwelle 12 verstellt wurde, ergeben sich bei der unteren Messerwelle andere Abstände zwischen den Messern als bei der Oberwelle. Es ist zu erkennen, daß dort der Versatz zwischen den beiden Messersätzen A und B um diese 15° Verstellwinkel differiert, indem jetzt statt des jeweils gleichen Abstandes von 30° zwischen den Messern B1, A1 sowie B2, A3 der Ober-Messerwelle 12 bei der unteren Messerwelle 13 die Abstände zwischen B1 und A1 45° und dafür zwischen B2 und A3 nur 15° betragen. Diese Anordnung kann aber je nach dem Verstellverfahren und den sonstigen Gegebenheiten variieren. Bei der unteren Messerwelle 13 sind diese Abstände auch unkritisch, weil die Messer nicht über die Messerwellenoberfläche 15 vorragen.

So ist in Fig. 4 zu erkennen, daß das Untermesser A3 dem Messer B2 in kurzem Abstand folgen kann, ohne daß Probleme im Schnittspalt auftreten. Es ergibt sich dann, wie aus Fig. 4 zu erkennen ist, ein Schnitteingriff zwischen den Messern des Satzes B, während die Messer des Satzes A wirkungslos durch den Schneidspalt laufen. Die Synchron-Schnittlänge 25, die bei Fig. 1 120° oder ein Drittel des Messerwellenumfanges betrug, ist jetzt bei Fig. 4 180° oder der halbe Messerwellenumfang, ohne daß an der Messerwelle anderes geändert wurde, als die gegenseitige Drehstellungszuordnung der beiden Messerwellen 12, 13 zueinander. Dazu braucht die Maschine nur sehr kurzfristig stillgesetzt werden.

Durch geschickte Ausnutzung unterschiedlicher Messersätze können auch Zwischenformate, die nicht durch entsprechende Teilungsverhältnisse erreicht werden können, mit nur geringfügiger Zwischenverzögerung bzw. -beschleunigung der Messerwellen erreicht werden. Vor allem kann aber sichergestellt werden, daß die das größte Produktionsvolumen einnehmenden Hauptformate mit maximaler Geschwindigkeit der Produktionslinie gefahren werden können, während auch die Nebenformate noch in einem akzeptablen Geschwindigkeitsbereich liegen. Ein weiterer Vorteil ist die geringere Belastung der Maschine durch den Ungleichförmigkeitsantrieb und die höhere Standzeit der Messer, die ja nur während eines Teils der gesamten Maschinenlaufzeit zum Einsatz kommen. Obwohl eine Ausführung mit zwei Messersätzen und einer relativ geringen Anzahl von Messern je Satz aus Herstellungsgründen zweckmäßig ist, ist es möglich, mehr als zwei Messersätze und/oder Messersätze mit größerer Messeranzahl vorzusehen. Die Variationsmöglichkeiten bezüglich der Synchronschnittlängen erhöhen sich dadurch. Bei der Messeranordnung auf beiden Messerwellen ist darauf zu achten, daß die Messer der Messersätze so angeordnet sind, daß in jeder schneidwirksamen Drehlagen-Zuordnung nur ein Satz mit dem entsprechenden Satz der anderen Messerwelle in Eingriff kommt, wobei ein Messer ggf. auch zu verschiedenen Sätzen gehören kann.

Fig. 7 zeigt die Messerwellen 12, 13, insbesondere ihre Lagerung 30 und Synchronisation 31, während die messertragenden Messerwellenabschnitte 32 verkürzt dargestellt sind. Zu beiden Seiten dieser wirksamen Messerwellenabschnitte 32 sind Lager 33 vorgesehen. Daran schließt die Messerwellensynchronisation 31 an. Sie ist an beiden Seiten der Messerwellen vorgesehen und enthält Synchronisationszahnräder 34, die ineinander eingreifen und die beiden Wellen gegenläufig miteinander synchronisieren. Sie sind mit speziellen Spannbüchsen auf dem entsprechenden Wellenabschnitt 36 festgeklemmt. Derartige Spannbüchsen sind in der DE-A-36 08 111 beschrieben.

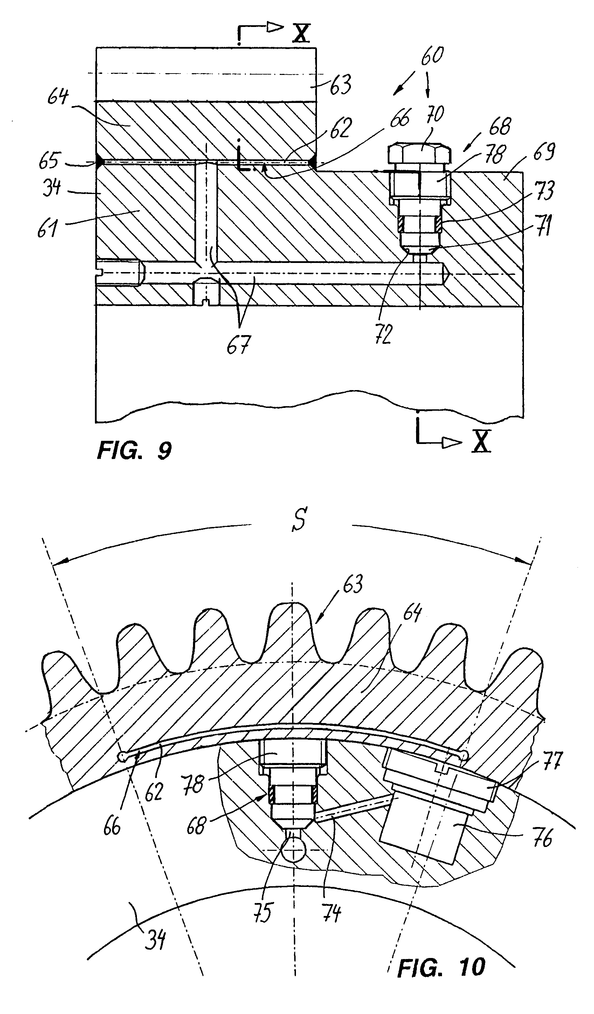

Jeweils ein Synchronisationszahnrad 34 jeder Zahnradpaarung ist auf einem von der Spannhülse festgehaltenen Nabenkörper 35 drehbar angeordnet, so daß das Zahnrad einen drehbaren Ring 38 bildet. Insbesondere Fig. 8 zeigt, daß daran ein Stellring 39 mit einer Radialverzahnung 40 angebracht ist, die in Flucht mit der Radialverzahnung 41 eines an dem Nabenkörper 37 radial innerhalb davon angebrachten Stellringes 42 liegt.

Den Radialverzahnungen 40, 41 gegenüber liegt eine damit zusammenpassende Radialverzahnung 43 an einem ringförmigen Verbindungskörper 44, der in Richtung des Pfeiles 45 axial verschiebbar ist, und zwar durch einen Hydraulikantrieb 46. Bei diesem handelt es sich um einen ringförmigen Hydraulikzylinder, der einen ringförmigen Zylinderabschnitt 47 mit U-Querschnitt hat, an dessen einer Stirnseite die Radialverzahnung 43 vorgesehen ist.

Der Kolben 48 des Hydraulikzylinders wird durch einen fest mit dem Nabenkörper 37 verbundenen Ringabschnitt gebildet, der in den U-förmigen Zylinderabschnitt 47 eingreift. Durch die Messerwelle führen Hydraulikkanäle 49 in den Kolben und von dort zu beiden Seiten des zwischen Kolben 48 und Zylinder 49 gebildeten Druckmittelraumes 50.

Durch entsprechende Druckmittelbeaufschlagung ist der Zylinderabschnitt 47 mit der Radialverzahnung 43 in Richtung des Pfeiles 45 axial verschiebbar. Die durch die Stellringe 39, 42, die Radialverzahnung 40, 41, 43 und den Hydraulikantrieb 46 gebildeten Einstellmittel 51 sind in Fig. 8 in der Verstellposition gezeigt, in der die Radialverzahnungen außer Eingriff miteinander sind, so daß die anhand von Fig. 5 gezeigte Verstellung der Obermesserwelle gegenüber der Untermesserwelle vorgenommen werden kann. Dazu sind beide Einstellmittel 51 (in Fig. 7 rechts an der Obermesserwelle 12 und links an der Untermesserwelle 13) ausgerastet. Die z.B. durch Markierung entsprechend gekennzeichnete oder eine entsprechende Drehwinkelsteuerung des Antriebs bewirkte Verdrehung der Obermesserwelle wird vorgenommen. Danach werden die Hydraulikantriebe 46 wieder betätigt, die die über beide Radialverzahnungen 40 und 41 reichende Radialverzahnung 43 in diese hineindrückt, wegen einer gewissen Keilform der Verzahnung eine Feinausrichtung vornimmt und die entsprechende Messerwelle 12, 13 mit dem zugehörigen Synchronisationszahnrad 34 wieder formschlüssig und absolut spielfrei verbindet. Der Hydraulikdruck wird während des Betriebes aufrechterhalten. Mit dieser Art von Rastkupplung ist nach einer relativ groben, vom Bediener automatisch oder manuell vorzunehmenden Verdrehung eine wiederholgenaue Synchronisation in der neuen Lage in µm-Bereich möglich. Der hydraulische Antrieb vereinfacht die Bedienung. Es könnte jedoch auch eine mechanische und ggf. manuell zu betätigende Kupplungseinrichtung vorgesehen sein.

Fig. 7 zeigt ferner eine in einem der Synchronisations-Zahnräder 34 vorgesehene Einrichtung zur sektoriellen Einstellung des Zahnspiels. Diese könnte in allen vier Synchronisations-Zahnrädern, zumindest aber in je einem Zahnrad je Zahnradpaar vorgesehen sein. Die Zahnspiel-Einstellmittel 60 sind in Fig. 9 und 10 im Detail dargestellt. Im Zahnradkörper 61 des Synchronisations-Zahnrades 34 sind jeweils dort, wo ein Schneideingriff auftreten kann, Schlitze 62 vorgesehen, die axial über die gesamte Zahnradbreite reichen und in Umfangsrichtung so gekrümmt verlaufen, daß der sich zwischen ihnen und der Verzahnung 63 verlaufende Abschnitt 64 des Zahnradkörpers beim Ausführungsbeispiel eine gleichmäßige Dicke hat. Der Schlitz 62 kann beispielsweise durch einen Laserschnitt vorgenommen sein. Axial sind die Schlitze 62 durch eine Verschweißung 65 geschlossen, so daß sie eine im wesentlichen geschlossene Druckmitteltasche 66 bilden. Der Schlitz erstreckt sich über einen Sektor mit einem Umfangswinkel S, der von der gewünschten Kontur des angestrebten "Hochschlages", dessen Höhe und der Dicke des Abschnittes 64 etc. abhängig ist. Im dargestellten Beispiel reicht der Sektor S, d.h. die Druckmitteltasche über ca. 40°.

Die Druckmitteltasche 66 ist über Bohrungen 67 an ein Ventil 68 angeschlossen, das außerhalb des Zahnradbereiches auf einem Nabenabschnitt 69 des Zahnrades liegt und von außen über eine Schlüsselfläche 70 zu betätigen ist. Das Ventil, dessen Ventilkörper ein mehrfach abgesetzter Schraubbolzen mit einer kegelstumpfförmigen Ventilfläche 71 ist, die mit einem entsprechend geformten Ventilsitz 72 zusammenarbeitet, ist durch eine Ringdichtung 73 abgedichtet. Der Ventileinlaß ist eine schräge Bohrung 74, die etwas oberhalb des Ventilsitzes seitlich in die Ventilbohrung einläuft, während der Ventilauslaß eine zentrische, mit den Bohrungen 67 kommunizierende Bohrung 75 ist.

Die Einlaßbohrung 74 steht mit einem Druckmittelanschluß 76 in Verbindung, der durch eine Verschlußschraube 77 verschlossen werden kann (Fig. 10). Für jede Druckmitteltasche 66 ist ein Druckmittelanschluß 76 mit Ventil vorgesehen.

Die sektorielle Einstellung des Zahnspiels wird wie folgt vorgenommen: Nach der Montage der Zahnradpaarung wird zuerst auf bekannte Weise eine Justierung des Zahnspieles über den gesamten Umfang vorgenommen. Dies kann beispielsweise durch Axialverschiebung der Zahnräder gegeneinander erfolgen, wenn diese eine leicht konische Form haben. Ein solches Verfahren ist in der DE-A-36 08 111 beschrieben. Nach dieser Justierung muß aber ein gewisses minimales Zahnspiel verbleiben, damit kein das Schmiermittel verdrängender und die Zahnflanken, z.B. durch Hertzsche Pressungen, zerstörender Druck entsteht, der die Zahnräder zerstören könnte. Spielfreiheit sollte allenfalls auf sehr geringen Umfangsabschnitten eingestellt werden.

Danach wird diese praktische Spielfreiheit auch auf anderen Sektoren des Zahnrades individuell eingestellt. Dazu wird dann am Druckmittelanschluß 76 eine Druckmittelquelle angeschlossen, beispielsweise eine Hydraulik-Handpumpe, die einen relativ hohen Druck von 1000 bar oder darüber erzeugen kann. Dieser Druck wird über das Ventil 68 in die Druckmitteltasche 66 geleitet und "bläst" diese auf, indem der Abschnitt 64 und damit die Verzahnung 63 geringfügig nach außen verformt wird. Es entsteht so ein partieller und sektorieller "Hochschlag" der Verzahnung, der beispielsweise zwei bis drei Hundertstel Millimeter betragen kann. Nachdem die gewünschte Spielfreiheit bzw. Spielarmut erreicht ist, wird das vorher geöffnete Ventil 68 durch Einschrauben des Ventilkörpers 78 geschlossen und die Druckmittelquelle kann entfernt werden. So werden nacheinander alle Sektoren, von denen mehrere über den Umfang des Zahnrades vorhanden sind, auf das gewünschte Minimalspiel eingestellt. Bei einer Zahnradpaarung reicht es normalerweise aus, wenn eines der Zahnräder die sektorielle Einstellmöglichkeit hat. Sie könnte aber auch an beiden Rädern einer Paarung vorhanden sein, wobei sich die sektoriellen "Hochschläge" an den entsprechenden Stellen addieren können oder durch entsprechenden Versatz der Sektoren zueinander, insbesondere bei Zahnradpaarungen ungleicher Zähnezahl, entsprechende Kombinationen entstehen können.

Bei der Verwendung einer Spannhülse gemäß die E-A-36 08 111 kann eine zusätzliche radiale Federung entstehen, die auch bei entsprechenden Durchmesseränderungen, beispielsweise thermischen Einflüssen, unzulässige Pressungen vermeidet.

An den Wellenenden 52 greift der Antrieb an, vorzugsweise ein kurzperiodisch drehzahlveränderbarer, nicht dargestellter Gleichstrommotor mit entsprechender Steuerung.

## Patentansprüche

1. Bearbeitungsmaschine für Materialbahnen, insbesondere Papier-Formatquerschneider (11), mit zwei gegenläufig drehbaren Maschinenteilen (12, 13), insbesondere Messerwellen mit wenigstens einen Messersatz (A, B) bildenden Messern am Umfang, wobei die drehbaren Maschinenteile (12, 13) durch wenigstens ein Zahnradpaar (34) mit je wenigstens einem Zahnradkörper (61) und einer Verzahnung (63) miteinander synchronisiert sind, gekennzeichnet durch Mittel (60) zur sektoriellen Einstellung des Zahnspiels in wenigstens einer Umfangsposition wenigstens eines der Zahnräder (34).

2. Bearbeitungsmaschine nach Anspruch 1, dadurch gekennzeichnet, daß über den Umfang des wenigstens einen Zahnrades (34) mehrere sektorielle Einstellmittel (60) vorgesehen sind.

3. Bearbeitungsmaschine nach Anspruch 1 oder 2, dadurch gekennzeichnet, daß die sektoriellen Einstellmittel (60) Mittel zur sektoriellen Verformung des Arbeitsumfanges des wenigstens einen Zahnrades (34) gegenüber der Rotationssymetrie aufweisen, wobei vorzugsweise die Verformungsmittel zur Verschiebung der Zahnflanken des wenigstens einen Zahnrades (34) in Richtung auf das damit in Eingriff befindliche Zahnrad (34) zu ausgebildet sind und/oder die sektoriellen Verformungsmittel eine auf wenigstens einen Umfangsabschnitt (S) des Zahnrades begrenzte Druckmitteltasche (66) aufweisen, die unter dem Druck eines flüssigen Druckmittels den Arbeitsumfang aufwölbt.

4. Bearbeitungsmaschine nach Anspruch 3, dadurch gekennzeichnet, daß die Druckmitteltasche (66) ein allseitig geschlossener, im wesentlichen in Umfangsrichtung verlaufender Schlitz (62) im Zahnradkörper (61) ist, der eine Druckmittelzuleitung (67, 74, 75) mit einem Absperrventil (68) aufweist, wobei vorzugsweise die Druckmittelzuleitung einen von außerhalb des Zahnrades (34) beschickbaren Druckmittelanschluß (76) aufweist.

5. Bearbeitungsmaschine nach Anspruch 3 oder 4, dadurch gekennzeichnet, daß der die Druckmitteltasche (66) bildende Schlitz im Zahnradkörper relativ dicht unter der Verzahnung verläuft und/oder im Zahnradbereich axial durchgehend ausgebildet und durch eine Schweißnaht (65) an seinen beiden axialen Enden verschlossen ist und/oder ein zwischen der Druckmitteltasche (66) und der Verzahnung (65) liegender Abschnitt (64) des Zahnradkörpers (61) einen in axialer und/oder Umfangsrichtung ungleichförmigen Querschnitt aufweist.

6. Bearbeitungsmaschine, insbesondere nach einem der vorliegenden Ansprüche, dadurch gekennzeichnet, daß die Maschinenteile Messerwellen (12, 13) sind, wobei an jeder Messerwelle Messer (A1 bis A3, B1, B2) angebracht sind, die im Bereich eines Schnittspaltes (16) in Schnitteingriff miteinander einen ein Querschneiden der Materialbahn (21) bewirkenden Messersatz (A, B) bilden, und wobei an den Messerwellen (12, 13) jeweils wenigstens zwei Messersätze (A, B) vorgesehen sind, von denen jeweils einer in einer bestimmten Drehstellungszuordnung der Messerwellen (12, 13) zueinander in Schnitteingriff ist.

7. Bearbeitungsmaschine nach Anspruch 6, dadurch gekennzeichnet, daß die Messersätze (A, B) jeweils eine unterschiedliche Zahl von in Schnitteingriff miteinander befindlichen Messern (A1 bis A3, B1, B2) am Umfang aufweisen.

8. Bearbeitungsmaschine nach Anspruch 6 oder 7, gekennzeichnet durch Drehstellungs-Einstellmittel (51), mit denen die Messerwellen (12, 13) in ihrer Drehstellungszuordnung zueinander einstellbar sind, die vorzugsweise wenigstens eine mit Radialverzahnung (40, 41, 43) versehene, insbesondere druckmittelbetätigte Rastkupplung aufweisen, die ggf. zwei konzentrisch zueinander angeordnete radial verzahnte Stellringe (40, 41) aufweist, von denen vorzugsweise ein Stellring (39) an einem Synchronisationszahnrad (34) einer Messerwelle (12, 13) angeordnet und der andere Stellring (42) mit der Messerwelle (12, 13) drehfest verbunden ist, und daß die Radialverzahnungen (40, 41) der Stellringe (39, 42) durch eine damit zusammenwirkende Radialverzahnung (43) an einem axialbeweglichen Verbindungskörper (44) überbrückbar ist.

9. Bearbeitungsmaschine nach einem der Ansprüche 6 bis 8, dadurch gekennzeichnet, daß die Messer jedes Messersatzes (A, B) in einem regelmäßigen Teilungsverhältnis auf den Messerwellen angeordnet sind.

10. Bearbeitungsmaschine nach einem der Ansprüche 6 bis 9, dadurch gekennzeichnet, daß die Messerwellen (12, 13) durch zwei Synchronisationen (31) miteinander verbunden sind und die Einstellmittel (51) an beiden Synchronisationen vorgesehen sind.

11. Bearbeitungsmaschine nach einem der vorhergehenden Ansprüche, dadurch gekennzeichnet, daß wenigstens eine der Messerwellen (13) wenigstens an den Stellen, an denen in einer der Drehstellungszuordnungen der Messerwellen zueinander ein Messer der anderen Messerwelle (12) ohne Schneideingriff den Schnittspalt (16) passiert, einen Durchlaß für die Materialbahn (21), vorzugsweise eine Ausnehmung (23) in der Oberfläche (15) der Messerwelle (13) vorgesehen ist und/oder an einer der Messerwellen (12), vorzugsweise an einer, bei der Messer über die Messerwellenoberfläche (14) vorstehen, der Umfangsabstand zwischen den Messern beider Messersätze (A, B) so groß wie möglich gewählt wird, beispielsweise bei zwei Messersätzen mit zwei und drei Messern um mindestens 30° gegeneinander versetzt sind.

12. Bearbeitungsmaschine nach einem der Ansprüche 6 bis 11, dadurch gekennzeichnet, daß jedes Messer einer Messerwelle (12) bei allen Drehstellungszuordnungen nur einem Messer der anderen Messerwelle (13) zugeordnet ist.

13. Bearbeitungsmaschine nach einem der Ansprüche 6 bis 12, dadurch gekennzeichnet, daß die Messerwellen (12, 13) über einen periodisch in der Umdrehungsgeschwindigkeit änderbaren Ungleichförmigkeitsantrieb angetrieben ist.

14. Bearbeitungsmaschine nach einem der vorhergehenden Ansprüche, dadurch gekennzeichnet, daß die sektoriellen Einstellmittel (60) an wenigstens einem Synchronisationszahnrad (34) im Bereich eines Schneideingriffs für jeden Messersatz (A, B) vorgesehen sind.
